# EUROPÄISCHE PATENTSCHRIFT

(11) **EP 4 157 678 B1**
(45) Veröffentlichungstag und Bekanntmachung des Hinweises auf die Patenterteilung: **26.06.2024**
(21) Anmeldenummer: 21728867.9
(22) Anmeldetag: 21.05.2021
(51) Int. Cl.: B60R 22/28

(54) **SELBSTREGULIERENDE DÄMPFEREINHEIT**
SELF-REGULATING DAMPER UNIT
UNITÉ D'AMORTISSEUR À RÉGULATION AUTOMATIQUE

(30) Priorität: 25.05.2020 DE 102020113961
(43) Veröffentlichungstag der Anmeldung: 05.04.2023
(73) Patentinhaber: STABILUS GmbH, 56070 Koblenz (DE)
(72) Erfinder: LÖHKEN, Lars, 53545 Linz am Rhein (DE); PIROTH, Raphael, 56077 Koblenz (DE); MÜLLER, Markus, 56072 Koblenz (DE); PROBST, Ulrich, 56204 Hillscheid (DE); WEBER, Marcus, 56567 Neuwied (DE)
(74) Vertreter: Weickmann & Weickmann PartmbB
(86) Internationale Anmeldenummer: PCT/EP2021/063693
(87) Internationale Veröffentlichungsnummer: WO 2021/239630

(56) Entgegenhaltungen:
- EP-A1- 2 180 206
- DE-A1- 1 555 491
- DE-B1- 2 139 942
- DE-B4-102008 008 268
- DE-U- 1 985 453
- GB-A- 2 011 021
- JP-A- S5 999 135
- JP-A- 2018 179 091
- US-B1- 6 196 589

## Beschreibung

Die Erfindung betrifft eine selbstregulierende Dämpfereinheit, umfassend einen Zylinder, welcher mit einem Fluid befüllt ist, einen Kolben, welcher das Innere des Zylinders in einen ersten Arbeitsraum und einen zweiten Arbeitsraum unterteilt, und welcher in dem Zylinder verlagerbar angeordnet ist, eine mit dem Kolben verbundene Kolbenstange, welche an einem Ende des Zylinders aus diesem austritt, und wenigstens eine Durchgangsbohrung, welche dazu eingerichtet ist, den ersten Arbeitsraum mit dem zweiten Arbeitsraum in Fluidverbindung zu versetzen.

Es gibt diverse Anwendungsgebiete, in welchen es wünschenswert ist, dass sich eine Dämpfereinheit selbstständig reguliert. Beispielsweise kann es industriellen Anwendungen wünschenswert sein, unterschiedlich große Massen mit einer Dämpfungseinheit gleichmäßig abzufangen. In einem weiteren Beispiel greifen in modernen Fahrzeugen im Crashfall zum Schutz der Insassen verschiedene Sicherheitssysteme. Dazu zählen zum Beispiel Gurtstraffer, Airbag oder Gurtkraftbegrenzer. Dabei sorgt zuerst der Gurtstraffer dafür, dass ein eventuell zu lose angelegter Gurt mit Vorspannung am Insassen anliegt. In zeitlich sehr nah beieinander liegender Abfolge löst dann der Airbag aus. Um nun die Schulterpartie des Insassen schützen und dabei gleichzeitig die maximale Wirkung des Airbags ausnutzen zu können, sorgt der Gurtkraftbegrenzer dadurch, dass dem Gurt ermöglicht wird, um einen vorbestimmten Weg nachzugeben, das heißt abgerollt zu werden, dafür, dass der Insasse gezielt nach einer bestimmten Zeit und/oder einem bestimmten Weg mit dem Kopf auf den Airbag auftrifft und die kritische Last auf die Schulterpartie nicht überschritten wird.

Eine gattungsgemäße selbstregulierende Dämpfereinheit ist hierbei beispielsweise aus der DE 15 55 491 A1 bekannt.

Jedoch sind aus dem Stand der Technik bekannte Systeme nicht oder nur unter Einbeziehung zusätzlicher Sensorik dazu eingerichtet, auf unterschiedliche Körpergewichte der Insassen zu reagieren bzw. die am Gurtkraftbegrenzer jeweils notwendige Kraft zum Zurückhalten des Insassen derart einzustellen, dass dieser nicht verletzt wird oder zumindest ein Verletzungsrisiko reduziert werden kann.

Es ist daher die Aufgabe der vorliegenden Erfindung, eine selbstregulierende Dämpfereinheit bereitzustellen, welche beispielsweise als Gurtkraftbegrenzer eingesetzt werden kann, und welche dabei dazu eingerichtet ist, sich an ein jeweiliges Gewicht eines Insassen anpassen zu können.

Diese Aufgabe wird gemäß der vorliegenden Erfindung durch eine selbstregulierende Dämpfereinheit mit den Merkmalen des Anspruchs 1 gelöst.

Es sei bereits an dieser Stelle darauf hingewiesen, dass der Ausdruck "einen verfügbaren Durchlassquerschnitt verändern" sowohl ein teilweises Öffnen/Schließen des Durchlassquerschnitts als auch ein vollständiges Öffnen/Schließen des Durchlassquerschnitts umfassen kann. In anderen Worten kann das Schaltgewicht dazu eingerichtet sein, in einer ersten Position, beispielsweise der Ruheposition, die Durchgangsbohrung zumindest teilweise zu verschließen, um die Strömungsrate von Fluid aus dem einen Arbeitsraum in den anderen Arbeitsraum auf einen dem verfügbaren Durchlassquerschnitt der Durchgangsbohrungen entsprechenden Wert zu reduzieren (bzw. zu verhindern), und in einer zweiten Position, beispielsweise der Freigabeposition einer maximalen Verlagerung des Schaltgewichts von der Ruheposition weg, die Durchgangsbohrung zumindest teilweise, insbesondere vollständig, freizugeben, um die Strömungsrate von Fluid aus dem einen Arbeitsraum in den anderen Arbeitsraum zu steigern.

Erklärt an dem Beispiel des Gurtkraftbegrenzers, kann das Schaltgewicht derart an der Kolbenstange angeordnet sein, dass, auf eine erste Beschleunigung an der Kolbenstange hin, das Schaltgewicht in seiner Ruheposition gehalten wird, wodurch die Dämpfereinheit eine Dämpfungskraft aufweist, welche dem zum Durchströmen von Fluid verfügbaren Durchlassquerschnitt der wenigstens einen Durchgangsbohrung entspricht, und dass, sobald die Beschleunigung an der Kolbenstange nachlässt, das Schaltgewicht auf Grund seiner Trägheit aus seiner Ruheposition in Richtung der Freigabeposition verlagert wird, so dass der Durchlassquerschnitt vergrößert wird und eine dazu entsprechende Dämpfungskraft der Dämpfereinheit reduziert wird. Natürlich kann eine erfindungsgemäße Dämpfereinheit analog für eine Druckbelastung auf die Kolbenstange ausgelegt sein, das heißt ein Einschieben der Kolbenstange in den Zylinder der Dämpfereinheit.

Auf diese Weise kann eine Dämpfereinheit bereitgestellt werden, welche die Beschleunigung der Kolbenstange, das heißt im Falle des Gurtkraftbegrenzers, des Gurtes, konstant halten kann, ungeachtet der Geschwindigkeit und/oder der Kräfte, welche darauf einwirken. Dadurch kann eine zur Verfügung stehende Dämpferstrecke optimal ausgenutzt werden. Im Falle des Gurtkraftbegrenzers kann durch die erfindungsgemäße Dämpfereinheit eine schwere Person durch den Gurt höhere Kräfte an der Schulter erfahren als eine leichte Person, aber die Gurtgeschwindigkeit wird bei der gleichen Dämpferstrecke unabhängig vom Gewicht der Person um den gleichen Betrag reduziert. Die Dämpfereinheit kann somit insassensensitiv sein.

Die erfindungsgemäße Dämpfereinheit kann beispielsweise einen Hub von 150 mm aufweisen und/oder eine Bewegungsgeschwindigkeit von 15 m/s zulassen.

Ferner sei angemerkt, dass die erfindungsgemäße Dämpfereinheit stromlos betreibbar ist. Dies kann es ermöglichen, auch bei einem Totalausfall der On-Board-Stromversorgung eine voll funktionsfähige Dämpfereinheit bereitzustellen. So müssen keine Sensoreinrichtungen mit Strom betrieben werden. Auch sind keine Informationen einer Fahrzeugsensorik erforderlich, um die Dämpfereinheit insassenabhängig einstellen und betreiben zu können.

Es ist auch denkbar, dass die Kolbenstange an beiden Längsenden des Zylinders aus diesem austritt. Der Kolben ist in einer derartigen Ausführungsform nicht an einem Längsende der Kolbenstange angeordnet, sondern kann beispielsweise etwa mittig in Bezug auf eine Länge der Kolbenstange angeordnet sein. Somit kann der Zylinder der Dämpfereinheit beispielsweise vollständig mit einem Fluid befüllt werden. Dadurch können Verwirbelungen im Dämpfungsfluid (z.B. Öl) beim Betrieb der Dämpfereinheit reduziert werden, so dass, da im Wesentlichen kein Gas mehr in dem Zylinder umfasst ist, die Dämpfereinheit lageunabhängig eingesetzt werden kann.

Ferner kann ein Ausgleichsspeicher bzw. Membranspeicher oder Ähnliches vorgesehen sein. Sollte der Speicher in einem druckbelasteten Arbeitsraum eingesetzt werden, kann zusätzlich ein Ventil vorgesehen sein. Damit kann die Dämpfereinheit, auch mit nur aus einer Seite austretender Kolbenstange, lageunabhängig betrieben werden, da der Volumenausgleich außerhalb des Arbeitsraums angeordnet ist. Dies kann insbesondere für Doppelrohrdämpfer, Membrandämpfer u. ä. anwendbar sein.

In einer Weiterbildung der vorliegenden Erfindung kann an einem Außenumfang des Kolbens eine Dichtung angeordnet sein, welche den Kolben gegenüber dem Zylinder abdichtet. Es kann somit verhindert werden, dass Fluid aus dem einen Arbeitsraum in den anderen Arbeitsraum an einem Außenumfang des Kolbens vorbei strömt.

Erfindungsgemäß ist mit dem Schaltgewicht ein elastisches Element, insbesondere eine Feder, verbunden, welches dazu eingerichtet ist, das Schaltgewicht in seine Ruheposition zu drängen. Hierdurch kann zum einen festgelegt werden, dass sich das Schaltgewicht zum Beginn der Bewegung der Kolbenstange tatsächlich in seiner Ruheposition befindet, und zum anderen kann durch die Federrate des elastischen Elements die Verzögerung eingestellt werden, welche notwendig ist, um das Schaltgewicht aus seiner Position entgegen der Federkraft des elastischen Elements in Richtung der Freigabeposition bewegen zu können. Dabei sei allgemein angemerkt, dass die Ruheposition und/oder die Freigabeposition relativ zu der Durchgangsbohrung definiert sein können/kann. Das elastische Element kann es ferner dadurch, dass das Schaltgewicht nach einem Auslösen der Dämpfereinheit wieder in die Ruheposition zurück verlagert wird, ermöglichen, dass die Dämpfereinheit mehrfach verwendbar sein kann.

Dabei kann das mit dem Schaltgewicht verbundene elastische Element dazu eingerichtet sein, auch in der Ruheposition des Schaltgewichts, eine vorbestimmte Kraft auf das Schaltgewicht auszuüben. Hierdurch kann auf das Schaltgericht in seiner Ruheposition eine vorbestimmte Vorspannung ausgeübt werden, um insbesondere die Kraft sehr genau definieren zu können, welche dafür notwendig ist, dass das Schaltgericht seine Ruheposition verlassen kann.

Erfindungsgemäß ist ein Anschlag bereitgestellt, gegen welchen das mit dem Schaltgewicht verbundene elastische Element das Schaltgewicht drängt. Durch einen solchen Anschlag kann die Ruheposition des Schaltgewichts definiert werden und in einer wiederholbaren Weise von dem Schaltgewicht durch das elastische Element angefahren werden. Der Anschlag kann beispielsweise als ein von der Kolbenstange nach radial außen vorstehender Vorsprung, welcher insbesondere mit der Kolbenstange einstückig ausgebildet sein kann, oder als ein in eine Nut der Kolbenstange eingreifender Federring ausgebildet sein.

Ferner kann in der Ruheposition des Schaltgewichts ein vorbestimmter Abschnitt der wenigstens einen Durchgangsöffnung für einen Durchtritt von Fluid offen verbleiben. Dies kann insbesondere dadurch realisiert werden, dass das Schaltgewicht die Durchgangsöffnung in seiner Ruheposition nicht vollständig verschließt. Es könnte aber auch eine Fluidverbindung zwischen den beiden Arbeitsräumen vorhanden sein, welche durch das Schaltgewicht nicht verdeckt wird. Auf diese Weise kann eine anfängliche Fluidströmung zu Beginn einer Bewegung der Kolbenstange bzw. des Kolbens in dem Zylinder der Dämpfereinheit definiert werden. Das Schaltgewicht kann die Durchgangsöffnung aber auch ganz verschließen. Hierzu sollte ein zusätzlicher Überströmquerschnitt an anderer Stelle im Kolbensystem hinzugefügt werden. Dieser sollte insbesondere dem Durchlassquerschnitt entsprechen, welcher ansonsten dem Schaltgewicht in maximal geschlossener Position entspricht. Auf diese Weise können bei gegebenem Bauraum entsprechende Querschnitte vergrößert werden.

Der offen verbleibende Querschnitt der Durchgangsöffnung, welcher der Ruheposition des Schaltgewichts zugeordnet ist, kann beispielsweise 1 mm² bis 4 mm², insbesondere in etwa 2,5 mm², betragen. Der vollständig geöffnete Querschnitt der Durchgangsöffnung kann beispielsweise 4 mm² bis 10 mm², insbesondere in etwa 6 mm², betragen. Ein Verhältnis des vollständig geöffneten Querschnitts der Durchgangsöffnung zu dem Querschnitt der Durchgangsöffnung, welcher der Ruheposition des Schaltgewichts zugeordnet ist, kann beispielsweise 1 bis 10, insbesondere 1 bis 4, betragen. Natürlich hängt dies stark von der Skalierung und dem Einsatzzweck der Dämpfereinheit ab und es sind auch von dem Voranstehenden abweichende Querschnitte und Verhältnisse im Rahmen der vorliegenden Erfindung möglich.

Es ist auch denkbar, dass in der Ruheposition des Schaltgewichts keine Durchgangsöffnung zwischen den beiden Arbeitsräumen (auch nicht teilweise) geöffnet verbleibt. In diesem Fall könnte ein kompressibles Dämpfungsfluid, zum Beispiel ein Gas, wie Luft, in dem Zylinder der erfindungsgemäßen Dämpfereinheit verwendet werden, um eine anfängliche Dämpfung zu gewährleisten. Auch könnte ein erster Abschnitt eines Arbeitsraums ein kompressibles Dämpfungsfluid und ein zweiter Abschnitt des Arbeitsraums ein inkompressibles Dämpfungsfluid umfassen, so dass die beiden Funktionalitäten kombiniert werden können.

Vorteilhafterweise kann die Kolbenstange eine sich über zumindest einen Teil der Länge der Kolbenstange erstreckende Längsbohrung aufweisen. Diese Längsbohrung der Kolbenstange kann somit einen Abschnitt der Durchgangsbohrung bilden. Dabei kann die Längsbohrung insbesondere koaxial zu einer longitudinalen Mittelachse der Kolbenstange angeordnet sein. Ferner kann sich die Längsbohrung insbesondere auch in einem Bereich erstrecken, an welchem der Kolben an der Kolbenstange angeordnet ist. In einem Bereich der Längsbohrung, welcher dem Kolben entgegengesetzt ist, kann sich wenigstens eine Querbohrung in Bezug auf die und von der Längsbohrung nach radial außen erstrecken, um die beiden Arbeitsräume über die Längsbohrung und die wenigstens eine Querbohrung in Fluidverbindung zu versetzen. Diese Querbohrung kann dann in einer solchen Ausführungsform als die Durchgangsbohrung angesehen werden, welche von dem Schaltgewicht zumindest teilweise in der Ruheposition bedeckt wird.

Ferner sind erfindungsgemäß weitere Durchgangsbohrungen bereitgestellt, welche durch das Schaltgewicht in seiner Ruheposition teilweise oder vollständig verschlossen sind, und welche durch eine Verlagerung des Schaltgewichts aus der Ruheposition für einen Durchtritt von Fluid geöffnet sind. Diese weiteren Durchgangsbohrungen können sowohl durch eine Mehrzahl an den oben beschriebenen Querbohrungen realisiert werden als auch durch zusätzliche Verbindungen der beiden Arbeitsräume, wie beispielsweise Durchgangsbohrungen in dem Kolben, welche von dem Schaltgewicht in seiner Ruheposition, beispielsweise gleichzeitig zu der wenigstens einen Querbohrung, wenigstens teilweise bedeckt werden können.

Insbesondere kann ein weiterer Anschlag bereitgestellt sein, gegen welchen das Schaltgewicht anliegt, wenn es maximal aus seiner Ruheposition verlagert worden ist. In dieser Position der maximalen Durchgangsöffnung, welche oben als "Freigabeposition" bezeichnet worden ist, ist für die Fluidströmung zwischen den beiden Arbeitsräumen ein größerer Durchlassquerschnitt freigegeben als wenn sich das Schaltgewicht in seiner Ruheposition befindet. Dieser Anschlag kann beispielsweise als ein von dem Kolben in Richtung des Schaltgewichts vorstehendes Rohr ausgebildet sein, durch dessen Inneres ein Abschnitt der Kolbenstange verläuft.

Die Dämpfereinheit kann ferner einen Impulstilger umfassen, welcher in einer anfänglichen Ruheposition mit dem Schaltgewicht in Kontakt steht. Ein Impulstilger im Sinne der vorliegenden Erfindung ist eine Masse, welche einen ersten Impuls auf das Schaltgewicht aufnehmen kann, um ein Lösen des Schaltgewichts von dem der Ruheposition des Schaltgewichts zugeordneten Anschlag bei der initialen Beschleunigung der Kolbenstange vermeiden zu können. Der Impulstilger kann beispielsweise ringförmig ausgebildet sein. Dabei kann der Impulstilger an seinem Innendurchmesser an dem von dem Kolben in Richtung des Schaltgewichts vorstehenden Rohr, welches den Anschlag für die Freigabeposition bildet, gelagert sein. Zwischen dem Außendurchmesser des Impulstilgers und einer Innenfläche der Wandung des Zylinders der Dämpfereinheit kann ein vorbestimmter Spalt verbleiben, damit Fluid, welches sich zwischen dem Kolben und dem Impulstilger befindet, an dem Impulstilger vorbei strömen kann. Zu diesem Zweck kann der Impulstilger auch mit Durchgangsöffnungen und/oder mit einem in Umfangsrichtung nicht kreisförmig verlaufenden, beispielsweise mit Kerben versehenen, Innendurchmesser und/oder Außendurchmesser versehen sein.

Zu diesem Zweck kann der Impulstilger mit einem elastischen Element verbunden sein, welches den Impulstilger in Richtung des Schaltgewichts drängt. Auf diese Weise kann gemäß dem Impulserhaltungssatz ein auf das Schaltgewicht ausgeübter Impuls an den Impulstilger weitergegeben werden, so dass gewährleistet werden kann, dass das Schaltgewicht erst bei einer entsprechend großen Verzögerung der Kolbenstange aus der Ruheposition in Richtung der Freigabeposition verlagert wird, und nicht bereits durch den initialen Impuls auf die Kolbenstange bzw. auf das Schaltgewicht. Der Impulstilger kann insbesondere gegenüber dem Kolben über eine Feder abgestützt sein, wobei die Feder insbesondere radial außerhalb des oben erwähnten Rohrs angeordnet sein kann, welche als Anschlag für das Schaltgewicht in der Freigabeposition dient. Somit könnte in einem Ausführungsbeispiel in einer radialen Richtung mit der Kolbenstange beginnend als Nächstes das elastische Element, welches mit dem Schaltgewicht verbunden ist, der Anschlag für die Freigabeposition des Schaltgewichts, das mit dem Impulstilger verbundene elastische Element und abschließend eine Wandung des Zylinders der Dämpfereinheit aufeinander folgen. Insbesondere kann die Federrate des elastischen Elements des Impulstilgers viel kleiner sein als die Federrate des elastischen Elements, welches mit Schaltgewicht verbunden ist. Die Vorbelastungskraft, mit welcher das elastische Element den Impulstilger in Richtung des Schaltgewichts drängt bzw. auf dieses drückt, kann beispielsweise derart ausgelegt sein, dass sie die Schwerkraft des Impulstilgers gerade übersteigt. Es kann dadurch gewährleistet werden, dass unabhängig von einer Orientierung der Dämpfereinheit im eingebauten Zustand der Impulstilger gegen das Schaltgewicht anliegt. Ferner kann gewährleistet werden, dass der Impulstilger nach einer Verlagerung aus der Position, in welcher der Impulstilger gegen das Schaltgewicht anliegt, wieder in diese Position zurück verlagert werden kann.

Dabei kann eine Fläche des Schaltgewichts, welche dazu eingerichtet ist, mit dem Impulstilger in Kontakt zu treten, und/oder eine Fläche des Impulstilgers, welche dazu eingerichtet ist, mit dem Schaltgewicht in Kontakt zu treten, mit einer Struktur versehen sein, durch welche eine Flächenadhäsion zwischen Schaltgewicht und Impulstilger definierbar ist. Diese Struktur von wenigstens einer der beiden in Kontakt tretenden Flächen sollte insbesondere dazu geeignet sein, einen Flächenkontakt und daher eine Adhäsion der beiden Flächen aneinander reduzieren zu können, denn im Falle einer Impulsübertragung von dem Schaltgewicht auf den Impulstilger muss sich der Impulstilger von dem Schaltgewicht einfach lösen können. Zum Beispiel kann wenigstens eine der beiden in Kontakt tretenden Flächen mit einer Struktur in Form eines Stirnverzahnungsprofils versehen sein.

Es kann auch wünschenswert sein, dass sich der Impulstilger nicht unmittelbar bei der Aufnahme des initialen Impulses von dem Schaltgewicht trennt. So kann beispielsweise durch ein vorbestimmtes Einstellen der Flächenadhäsion zwischen Impulstilger und Schaltgewicht erreicht werden, dass das Schaltgewicht von dem Impulstilger, zumindest über einen anfänglichen Bereich, "mitgeschleppt" wird, so dass das Schaltgewicht unmittelbar beim Einleiten des initialen Impulses aus seiner Ruheposition heraus verlagert werden kann.

An dieser Stelle sein angemerkt, dass die in Bezug auf die Paarung Impulstilger-Schaltgewicht dargelegten Merkmale und Effekte auch auf einen Flächenkontakt zwischen dem Schaltgewicht und dem Anschlag zutreffend sein können.

Das Schaltgewicht kann drehsicher auf der Kolbenstange gelagert sein, und/oder das Schaltgewicht kann an seiner Innenfläche eine Nut aufweisen, welche dazu eingerichtet ist, eine Fluidkommunikation zwischen der Durchgangsbohrung und dem Arbeitsraum, in welchem das Schaltgewicht angeordnet ist, unabhängig von einer rotatorischen Ausrichtung des Schaltgewichts zu der Kolbenstange, herzustellen. Durch eine derartige Ausbildung der Dämpfereinheit kann eine Bewegung bzw. eine Beschleunigung des Schaltgewichts aus der und/oder in die Ruheposition eindeutig definiert werden, da eine unbeabsichtigte Verdeckung der wenigstens einen Durchgangsöffnung vermieden werden kann.

Um das Schaltgewicht verdrehsicher auf der Kolbenstange lagern zu können, kann das Schaltgewicht einen Vorsprung aufweisen, welcher in eine an der Kolbenstange ausgebildete Ausnehmung, insbesondere eine Nut, eingreift.

In einem weiteren Aspekt betrifft die vorliegende Erfindung eine Sicherheitsgurteinheit, insbesondere für ein Fahrzeug, umfassend einen Sicherheitsgurt und eine erfindungsgemäße selbstregulierende Dämpfereinheit, wobei der Sicherheitsgurt mit einem aus der Kolbenstange und dem Zylinder direkt oder indirekt verbunden ist und das andere aus der Kolbenstange und dem Zylinder mit einer übergeordneten Baugruppe, insbesondere einem Fahrzeugkörper, verbunden ist. Mit Verweis auf die eingangs ausgeführte Beschreibung, kann die erfindungsgemäße selbstregulierende Dämpfereinheit als Gurtkraftbegrenzer für einen Sicherheitsgurt in Fahrzeugen verwendet werden, wobei die erfindungsgemäße Dämpfereinheit eine insassensensitive Dämpfung, das heißt eine Dämpfung, welche sich selbstständig auf ein Gewicht des Insassen einstellt, ermöglicht.

Die "direkte oder indirekte Verbindung" soll derart verstanden werden, dass zum Beispiel die Kolbenstange nicht unmittelbar mit dem Sicherheitsgurt in Kontakt stehen muss, solange eine kraftübertragende Verbindung zwischen den beiden Elementen vorhanden ist. So kann die Verbindung des Sicherheitsgurts mit der erfindungsgemäßen Dämpfereinheit, zum Beispiel in Bezug auf einen 3-Punkt-Gurt, an wenigstens einer der drei Fixierungspunkte des Sicherheitsgurts realisiert werden. Genauer gesagt, kann die Dämpfereinheit in einem ersten Beispiel in der (im Kfz unteren) Befestigung des Gurts und/oder im Bereich des Gurtschlosses und/oder an einem der Gurtaufrolleinrichtung zugeordneten Abschnitt eingesetzt werden. Bei dem Abschnitt, welcher der Gurtaufrolleinrichtung zugeordnet ist, kann die erfindungsgemäße Dämpfereinheit beispielsweise zwischen der Fahrzeugkarosserie und einem Gehäuse angeordnet sein, welches weitere denkbare Komponenten der Sicherheitsgurteinheit umfassen kann, wie etwa einen Gurtstraffer, eine Rücklaufsperre etc. Dabei kann dieses Gehäuse in einer Führung, wie einer Kulissenführung, verlagerbar sein.

Die vorliegende Erfindung wird im Folgenden in größerem Detail mit Bezug auf die begleitenden Zeichnungen beschrieben werden. Es stellt dar:

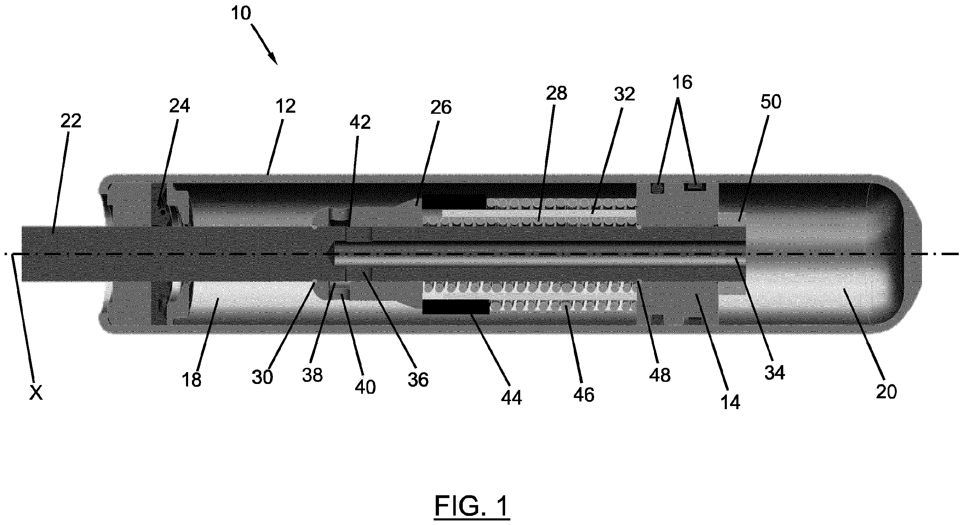

- Figur 1: eine Seitenquerschnittsansicht einer Ausführungsform der erfindungsgemäßen Dämpfereinheit.

In Figur 1 ist eine erfindungsgemäße Dämpfereinheit allgemein mit dem Bezugszeichen 10 bezeichnet. Die Dämpfereinheit 10 umfasst einen Zylinder 12, in welchem ein Kolben 14 angeordnet ist. Der Kolben 14 umfasst an seinem Außenumfang eine Dichtungseinrichtung 16, welche gegenüber einer Innenfläche der Wandung des Zylinders 12 abdichtet, so dass ein Innenraum des Zylinders 12 durch den Kolben 14 in einen ersten Arbeitsraum 18 und einen zweiten Arbeitsraum 20 unterteilt ist. Der Innenraum des Zylinders 12, umfassend die beiden Arbeitsräume 18 und 20, ist mit einem Fluid, beispielsweise Öl, befüllt.

Bevor das in Figur 1 dargestellte Ausführungsbeispiel der erfindungsgemäßen Dämpfereinheit 10 weiter beschrieben wird, sei darauf hingewiesen, dass die Dämpfereinheit 10 gemäß Figur 1 für eine Druckbelastung, das heißt ein Einschieben einer mit dem Kolben 14 verbundenen Kolbenstange 22 in den Zylinder 12 (bzw. ein Verlagern des Kolbens 14 in Figur 1 nach rechts), eingerichtet ist.

An dem Ende des Zylinders 12, an welchem die Kolbenstange 22 aus dem Zylinder 12 austritt, ist der erste Arbeitsraum 18 gegenüber einer Außenseite der Dämpfereinheit 10 hin durch eine weitere Dichtungseinrichtung 24 fluiddicht abgedichtet.

Auf der Kolbenstange 22 ist ein Schaltgewicht 26 derart angeordnet, dass es in der longitudinalen Erstreckungsrichtung der Kolbenstange 22 verlagerbar ist. In dem dargestellten Ausführungsbeispiel ist das Schaltgewicht 26 auch rotierbar relativ zu der Kolbenstange 22 angeordnet. Das Schaltgewicht 26 wird von einer Feder 28, welche sich an ihrem einen Längsende an dem Schaltgewicht 26 und an ihrem anderen Längsende an dem Kolben 14 abstützt, gegen einen Anschlag 30 gedrängt. Durch den Anschlag 30 wird, wenn das Schaltgewicht 26 mit dem Anschlag 30 in Kontakt steht, eine Ruheposition des Schaltgewichts 26 definiert und begrenzt. Der Anschlag 30 ist hier als Federring ausgebildet, welcher in eine in Umfangsrichtung verlaufende Nut der Kolbenstange 22 eingreift. Die Feder 28 umgibt die Kolbenstange 22 direkt, ohne jedoch an der Kolbenstange 22 anzuliegen.

Mit dem Kolben 14 und sich von diesem in Richtung des Schaltgewichts 26 erstreckend ist ein Rohr 32 verbunden, wobei das dem Kolben 14 entgegengesetzte Längsende des Rohrs 32, wenn das Schaltgewicht 26 derart aus der Freigabeposition verlagert worden ist, dass es mit dem Rohr 32 in Kontakt tritt, eine Freigabeposition des Schaltgewichts 26 definiert und begrenzt. Die Feder 28 ist, in einer radialen Richtung der Dämpfereinheit 10 betrachtet, innerhalb des Rohrs 32 angeordnet.

Koaxial zu einer Mittellinie X der Kolbenstange 22 ist in der Kolbenstange 22 eine Längsbohrung 34 angeordnet, welche einerseits an dem Ende der Kolbenstange 22, an welchem der Kolben 14 angeordnet ist, in den zweiten Arbeitsraum 20 mündet, und welche andererseits in einem Bereich der Kolbenstange 22 als Sackloch endet, welcher in radialer Richtung von dem Schaltgewicht 26 in seiner Ruheposition überlagert wird. Von der Längsbohrung 34 verlaufen Durchgangsbohrungen 36 derart zu der Kolbenstange 22 nach radial außen, dass sie (in diesem Ausführungsbeispiel teilweise) durch das Schaltgewicht 26 in seiner Ruheposition bedeckt werden.

Das Schaltgewicht 26 weist in seinem Inneren eine in Umfangsrichtung verlaufende Nut 38 auf, von welcher sich wiederum Bohrungen 40 in radialer Richtung erstrecken. Somit werden über die Bohrungen 40, die Nut 38, die Durchgangsbohrungen 36 und die Längsbohrung 34 der erste Arbeitsraum 18 und der zweite Arbeitsraum 20 miteinander in Fluidverbindung versetzt. Durch die lediglich teilweise Überdeckung der Durchgangsbohrungen 36 durch das Schaltgewicht 26 wird ein der Ruheposition des Schaltgewichts 26 zugeordnete Durchlassquerschnitt 42 definiert. Die umlaufende Nut 38 ist die Funktion der Überdeckung von einer rotatorischen Ausrichtung des Schaltgewichts 26 relativ zu der Kolbenstange 22 entkoppelt.

Wird auf die Kolbenstange 22 nun schlagartig ein Stoß ausgeübt, so dass der Kolben 14 in der in Figur 1 dargestellten Dämpfereinheit 10 nach rechts verlagert wird, wird das Schaltgewicht 26 auf Grund seiner Trägheit und auf Grund der Vorbelastung durch die Feder 28 gegen den Anschlag 30 gedrückt und Fluid strömt aus dem zweiten Arbeitsraum 20 in den ersten Arbeitsraum 18, wobei die Strömungsrate durch den Durchlassquerschnitt 42 begrenzt ist. Wird eine Verlagerung der Kolbenstange 22 und damit des Schaltgewichts 26 verzögert, so wird das Schaltgewicht 26 auf Grund seiner Trägheit aus seiner Ruheposition in Richtung seiner Freigabeposition verlagert, das heißt es tritt mit dem Anschlag 30 außer Kontakt, wodurch der Durchlassquerschnitt 42 vergrößert wird, da die Bohrungen 40 bzw. die Nut 38 des Schaltgewichts 26 mit den Durchgangsbohrungen 36, welche in Bezug auf die Ruheposition des Schaltgewichts 26 näher an dem Kolben 14 angeordnet sind als die Bohrungen 40 bzw. die Nut 38 des Schaltgewichts 26, durch die Verlagerung des Schaltgewichts 26 in größere Überdeckung zueinander gebracht werden. In seiner Freigabeposition, in welcher das Schaltgewicht 26 gegen das Rohr 32 anliegt, sind die Bohrungen 40 bzw. ist die Nut 38 mit den Durchgangsbohrungen 36 in maximale Überdeckung gebracht.

Eine Vergrößerung des Durchlassquerschnitts 42 bewirkt eine Vergrößerung der Fluidströmungsrate des Fluids, welches aus dem zweiten Arbeitsraum 20 in den ersten Arbeitsraum 18 strömt, so dass eine allgemeine Dämpfungskraft der Dämpfereinheit 10 verringert wird. Wenn die Verzögerung an der Kolbenstange 22 abnimmt, wird das Schaltgewicht 26 auf Grund der Wirkung der Feder 28 zurück in Richtung der Ruheposition verlagert, wodurch der Durchlassquerschnitt 42 wiederum verringert wird und eine Dämpfungskraft der Dämpfereinheit 10 wieder ansteigt.

Um verhindern zu können, dass der erste Impuls, welcher in die Kolbenstange 22 eingegeben wird, nicht das Schaltgewicht 26 von dem Anschlag 30 (insbesondere auf Grund von Elastizitäten der verwendeten Materialien für das Schaltgewicht 26 und/oder den Anschlag 30 (z.B. Metall)) weg verlagert, ist in der hier dargestellten Ausführungsform ein Impulstilger 44 angeordnet, welcher in der Ruheposition des Schaltgewichts 26 mit dem Schaltgewicht 26 in Kontakt steht, und welcher dazu eingerichtet ist, einen in das Schaltgewicht 26 initial eingebrachten Impuls aufzunehmen und sich von dem Schaltgewicht 26, auf Grund dieses Impulses, in Richtung des Kolbens 14 weg zu bewegen, so dass das Schaltgewicht 26 (zu diesem Zeitpunkt) in seiner Ruheposition verbleiben kann. Um zu gewährleisten, dass der Impulstilger 44 zu diesem Zweck an dem Schaltgewicht 26 anliegt, wird der Impulstilger 44 über eine Feder 46, welche sich an ihrem dem Impulstilger 44 entgegengesetzten Ende an dem Kolben 14 abstützt, auf das Schaltgewicht 26 zu vorbelastet.

Der Impulstilger 44 ist hier ringförmig ausgebildet und an seinem Innendurchmesser an einer Außenfläche des Rohrs 32 translatorisch und rotatorisch beweglich gelagert. Die mit dem Impulstilger 44 verbundene Feder 46 ist in einer radialen Richtung außerhalb des Rohrs 32 angeordnet.

Um den Kolben 14 mit der Kolbenstange 22 verbinden zu können, ist ein Begrenzungselement 48 an der Kolbenstange 22 vorgesehen, welches hier ebenfalls durch einen Federring ausgebildet ist, welcher in eine Nut der Kolbenstange 22 eingreift, wobei das Begrenzungselement 48 dazu eingerichtet ist, eine Verlagerung des Kolbens 14 auf das Schaltgewicht 26 zu zu begrenzen. An seiner dem Begrenzungselement 48 entgegengesetzten Seite ist der Kolben 14 über ein Sicherungselement 50, wie beispielsweise eine Mutter, in seiner an dem Begrenzungselement 48 anliegenden Position gesichert.

Nachzutragen sei, dass das Schaltgewicht 26 hier im Wesentlichen glockenförmig ausgebildet ist, so dass es in einem Bereich, in welchem das Schaltgewicht 26 gegen den Impulstilger 44 anliegt, einen größeren Durchmesser aufweist als in einem Bereich, in welchem das Schaltgewicht 26 gegen den Anschlag 30 anliegt. Dies kann verhindern, dass ein Fluidstrom aus dem bzw. in den ersten Arbeitsraum 18 durch einen zu engen Spalt zwischen den Bohrungen 40 und einer Innenfläche der Wandung des Zylinders 12 zusätzlich zu dem Durchlassquerschnitt 42 begrenzt wird und möglicherweise dadurch stärker begrenzt wird als durch den Durchlassquerschnitt 42, wodurch die Funktionsweise der erfindungsgemäßen Dämpfereinheit 10 negativ beeinträchtigt oder gar verhindert werden könnte.

## Patentansprüche

1. Selbstregulierende Dämpfereinheit (10), umfassend
einen Zylinder (12), welcher mit einem Fluid befüllt ist,
einen Kolben (14), welcher das Innere des Zylinders (12) in einen ersten Arbeitsraum (18) und einen zweiten Arbeitsraum (20) unterteilt, und welcher in dem Zylinder (12) verlagerbar angeordnet ist,
eine mit dem Kolben (14) verbundene Kolbenstange (22), welche an wenigstens einem Ende des Zylinders (12) aus diesem austritt, und
wenigstens eine Durchgangsbohrung (34, 36, 38, 40), welche dazu eingerichtet ist, den ersten Arbeitsraum (18) mit dem zweiten Arbeitsraum (20) in Fluidverbindung zu versetzen, wobei die Dämpfereinheit (10) ferner ein Schaltgewicht (26) umfasst, welches dazu eingerichtet ist, einen zum Durchströmen von Fluid verfügbaren Durchlassquerschnitt (42) der wenigstens einen Durchgangsbohrung (34, 36, 38, 40) durch eine Relativbewegung gegenüber der wenigstens einen Durchgangsbohrung (34, 36, 38, 40) zu verändern,
wobei das Schaltgewicht (26) derart relativ zu der wenigstens einen Durchgangsbohrung (34, 36, 38, 40) beweglich gelagert ist, dass eine Verzögerung des sich bewegenden Kolbens (14) bzw. der sich bewegenden Kolbenstange (22) eine Vergrößerung des Durchlassquerschnitts (42) der wenigstens einen Durchgangsbohrung (34, 36, 38, 40) hervorruft,
wobei mit dem Schaltgewicht (26) ein elastisches Element (28) verbunden ist, welches dazu eingerichtet ist, das Schaltgewicht (26) in seine Ruheposition zu drängen, und weitere Durchgangsbohrungen (36) bereitgestellt sind, welche durch das Schaltgewicht (26) in seiner Ruheposition teilweise oder vollständig verschlossen sind, und welche durch eine Verlagerung des Schaltgewichts (26) aus der Ruheposition für einen Durchtritt von Fluid geöffnet sind,
**dadurch gekennzeichnet, dass** ein Anschlag (30) bereitgestellt ist, gegen welchen das mit dem Schaltgewicht (26) verbundene elastische Element (28) das Schaltgewicht (26) drängt.

2. Selbstregulierende Dämpfereinheit (10) nach Anspruch 1,
**dadurch gekennzeichnet, dass** an einem Außenumfang des Kolbens (14) eine Dichtung (16) angeordnet ist, welche den Kolben (14) gegenüber dem Zylinder (12) abdichtet.

3. Selbstregulierende Dämpfereinheit (10) nach Anspruch 1 oder 2,
**dadurch gekennzeichnet, dass** das elastische Element (28) durch eine Feder (28) gebildet ist.

4. Selbstregulierende Dämpfereinheit (10) nach Anspruch 3,
**dadurch gekennzeichnet, dass** das mit dem Schaltgewicht (26) verbundene elastische Element (28) dazu eingerichtet ist, auch in der Ruheposition des Schaltgewichts (26), eine vorbestimmte Kraft auf das Schaltgewicht (26) auszuüben.

5. Selbstregulierende Dämpfereinheit (10) nach einem der Ansprüche 1 bis 4,
**dadurch gekennzeichnet, dass** in der Ruheposition des Schaltgewichts (26) ein vorbestimmter Abschnitt der wenigstens einen Durchgangsöffnung (36) für einen Durchtritt von Fluid offen verbleibt.

6. Selbstregulierende Dämpfereinheit (10) nach einem der Ansprüche 1 bis 5,
**dadurch gekennzeichnet, dass** die Kolbenstange (22) eine sich über zumindest einen Teil der Länge der Kolbenstange (22) erstreckende Längsbohrung (34) aufweist.

7. Selbstregulierende Dämpfereinheit (10) nach einem der Ansprüche 1 bis 6,
**dadurch gekennzeichnet, dass** ein weiterer Anschlag (32) bereitgestellt ist, gegen welchen das Schaltgewicht (26) anliegt, wenn es maximal aus seiner Ruheposition verlagert worden ist.

8. Selbstregulierende Dämpfereinheit (10) nach einem der Ansprüche 1 bis 7,
**dadurch gekennzeichnet, dass** die Dämpfereinheit (10) ferner einen Impulstilger (44) umfasst, welcher in einer anfänglichen Ruheposition mit dem Schaltgewicht (26) in Kontakt steht.

9. Selbstregulierende Dämpfereinheit (10) nach Anspruch 8,
**dadurch gekennzeichnet, dass** der Impulstilger (44) mit einem elastischen Element (46) verbunden ist, welches den Impulstilger (44) in Richtung des Schaltgewichts (26) drängt.

10. Selbstregulierende Dämpfereinheit (10) nach Anspruch 8 oder 9,
**dadurch gekennzeichnet, dass** eine Fläche des Schaltgewichts (26), welche dazu eingerichtet ist, mit dem Impulstilger (44) in Kontakt zu treten, und/oder eine Fläche des Impulstilgers (44), welche dazu eingerichtet ist, mit dem Schaltgewicht (26) in Kontakt zu treten, mit einer Struktur versehen ist, durch welche eine Flächenadhäsion zwischen Schaltgewicht (26) und Impulstilger (44) definierbar ist.

11. Selbstregulierende Dämpfereinheit (10) nach einem der Ansprüche 1 bis 10,
**dadurch gekennzeichnet, dass**
das Schaltgewicht (26) drehsicher auf der Kolbenstange (22) gelagert ist, und/oder
das Schaltgewicht (26) an seiner Innenfläche eine Nut (38) aufweist, welche dazu eingerichtet ist, eine Fluidkommunikation zwischen der Durchgangsbohrung (36) und dem Arbeitsraum (18), in welchem das Schaltgewicht (26) angeordnet ist, unabhängig von einer rotatorischen Ausrichtung des Schaltgewichts (26) zu der Kolbenstange (22), herzustellen.

12. Selbstregulierende Dämpfereinheit (10) nach Anspruch 11,
**dadurch gekennzeichnet, dass** das Schaltgewicht (26), im Falle einer Rotationssicherung gegenüber der Kolbenstange (22), einen Vorsprung aufweist, welcher in eine an der Kolbenstange (22) ausgebildete Ausnehmung, insbesondere eine Nut, eingreift.

13. Sicherheitsgurteinheit, insbesondere für ein Fahrzeug, umfassend einen Sicherheitsgurt und eine selbstregulierende Dämpfereinheit (10) nach einem der Ansprüche 1 bis 12, wobei der Sicherheitsgurt mit einem aus der Kolbenstange (22) und dem Zylinder (12) direkt oder indirekt verbunden ist und das andere aus der Kolbenstange (22) und dem Zylinder (12) mit einer übergeordneten Baugruppe, insbesondere einem Fahrzeugkörper, verbunden ist.

## Claims

1. Self-regulating damper unit (10), comprising
a cylinder (12) filled with a fluid,
a piston (14) dividing the interior of the cylinder (12) into a first working chamber (18) and a second working chamber (20), which piston is displaceably disposed in the cylinder (12),
a piston rod (22) connected to the piston (14) and emerging from the cylinder (12) at at least one end of the cylinder, and
at least one through-hole (34, 36, 38, 40) configured to place the first working chamber (18) in fluid communication with the second working chamber (20), wherein
the damper unit (10) further comprises a shiftable weight (26) configured to modify a passage cross-section (42) of the at least one through-hole (34, 36, 38, 40) available for the passage of fluid due to a relative movement with respect to the at least one through-hole (34, 36, 38, 40),
wherein the shiftable weight (26) is movably mounted relative to the at least one through-hole (34, 36, 38, 40) such that retardation of the moving piston (14) or the moving piston rod (22) causes enlargement of the passage cross-section (42) of the at least one through-hole (34, 36, 38, 40),
wherein an elastic element (28) is connected to the shiftable weight (26), which element is configured to push the shiftable weight (26) into its rest position, and additional through-holes (36) are provided that are partially or completely closed by the shiftable weight (26) in its rest position and are opened for the passage of fluid by a displacement of the shiftable weight (26) from the rest position,
**characterised in that** a stop (30) is provided, against which the elastic element (28) connected to the shiftable weight (26) pushes the shiftable weight (26).

2. Self-regulating damper unit (10) according to claim 1,
**characterised in that** a seal (16) is disposed on an outer circumference of the piston (14), which seal seals the piston (14) against the cylinder (12).

3. Self-regulating damper unit (10) according to claim 1 or 2,
**characterised in that** the elastic element (28) is formed by a spring (28).

4. Self-regulating damper unit (10) according to claim 3,
**characterised in that** the elastic element (28) connected to the shiftable weight (26) is configured to exert a predefined force on the shiftable weight (26) even when the shiftable weight (26) is in the rest position.

5. Self-regulating damper unit (10) according to any of claims 1 to 4,
**characterised in that,** with the shiftable weight (26) in a rest position, a predefined portion of the at least one through-opening (36) remains open for fluid to pass through.

6. Self-regulating damper unit (10) according to any of claims 1 to 5,
**characterised in that** the piston rod (22) comprises a longitudinal bore (34) extending over at least part of the length of the piston rod (22).

7. Self-regulating damper unit (10) according to any of claims 1 to 6,
**characterised in that** a further stop (32) is provided, against which the shiftable weight (26) lies when it has been maximally displaced from its rest position.

8. Self-regulating damper unit (10) according to any of claims 1 to 7,
**characterised in that** the damper unit (10) further comprises an impulse absorber (44), which is in contact with the shiftable weight (26) in an initial rest position.

9. Self-regulating damper unit (10) according to claim 8,
**characterised in that** the impulse absorber (44) is connected to an elastic element (46), which pushes the impulse absorber (44) towards the shiftable weight (26).

10. Self-regulating damper unit (10) according to claim 8 or 9,
**characterised in that** a surface of the shiftable weight (26) which is configured to come into contact with the impulse absorber (44) and/or a surface of the impulse absorber (44) which is configured to come into contact with the shiftable weight (26) is provided with a texture whereby a surface adhesion is definable between the shiftable weight (26) and the impulse absorber (44).

11. Self-regulating damper unit (10) according to any of claims 1 to 10,
**characterised in that**
the shiftable weight (26) is non-rotatably mounted on the piston rod (22), and/or
the shiftable weight (26) has a groove (38) on its inner surface, which groove is configured to establish fluid communication between the through-hole (36) and the working chamber (18) in which the shiftable weight (26) is disposed, independently of a rotational orientation of the shiftable weight (26) relative to the piston rod (22).

12. Self-regulating damper unit (10) according to claim 11,
**characterised in that** the shiftable weight (26), in the case in which it is secured against rotation relative to the piston rod (22), comprises a projection that engages in a recess, in particular a groove, disposed on the piston rod (22).

13. Seat belt unit, in particular for a vehicle, comprising a seat belt and a self-regulating damper unit (10) according to any of claims 1 to 12, wherein the seat belt is directly or indirectly connected to one of the piston rod (22) and the cylinder (12) and the other of the piston rod (22) and the cylinder (12) is connected to a higher-level assembly, in particular a vehicle body.

## Revendications

1. Unité d'amortissement autorégulée (10), comprenant
un cylindre (12) rempli d'un fluide,
un piston (14) qui divise l'intérieur du cylindre (12) en une première chambre de travail (18) et en une deuxième chambre de travail (20) et qui est disposé de manière à pouvoir se déplacer dans le cylindre (12),
une tige de piston (22) reliée au piston (14), qui sort du cylindre (12) à au moins une extrémité de celui-ci, et
au moins un alésage traversant (34, 36, 38, 40) conçu pour mettre la première chambre de travail (18) en communication fluidique avec la deuxième chambre de travail (20),
dans laquelle
l'unité d'amortissement (10) comprend en outre un contrepoids de commutation (26) conçu pour modifier une section transversale de passage (42), disponible pour l'écoulement du fluide, dudit au moins un alésage traversant (34, 36, 38, 40) par un mouvement relatif par rapport audit au moins un alésage traversant (34, 36, 38, 40),
le contrepoids de commutation (26) est monté mobile par rapport audit au moins un alésage traversant (34, 36, 38, 40) de telle sorte qu'un ralentissement du piston (14) en mouvement ou de la tige de piston (22) en mouvement provoque un agrandissement de la section transversale de passage (42) dudit au moins un alésage traversant (34, 36, 38, 40),
un élément élastique (28) est relié au contrepoids de commutation (26), lequel est conçu pour pousser le contrepoids de commutation (26) vers sa position de repos, et il est prévu d'autres alésages traversants (36) qui sont partiellement ou complètement fermés par le contrepoids de commutation (26) dans sa position de repos, et qui, pour le passage du fluide, sont ouverts par un déplacement du contrepoids de commutation (26) hors de la position de repos,
**caractérisée en ce qu'**il est prévu une butée (30) contre laquelle l'élément élastique (28), relié au contrepoids de commutation (26), pousse le contrepoids de commutation (26).

2. Unité d'amortissement autorégulée (10) selon la revendication 1,
**caractérisée en ce qu'**un joint d'étanchéité (16) est disposé sur une périphérie extérieure du piston (14), lequel assure l'étanchéité du piston (14) par rapport au cylindre (12).

3. Unité d'amortissement autorégulée (10) selon la revendication 1 ou 2,
**caractérisée en ce que** l'élément élastique (28) est formé par un ressort (28).

4. Unité d'amortissement autorégulée (10) selon la revendication 3,
**caractérisée en ce que** l'élément élastique (28) relié au contrepoids de commutation (26) est conçu pour exercer une force prédéterminée sur le contrepoids de commutation (26), même dans la position de repos du contrepoids de commutation (26).

5. Unité d'amortissement autorégulée (10) selon l'une des revendications 1 à 4,
**caractérisée en ce que**, dans la position de repos du contrepoids de commutation (26), une portion prédéterminée dudit au moins un orifice traversant (36) reste ouverte pour le passage d'un fluide.

6. Unité d'amortissement autorégulée (10) selon l'une des revendications 1 à 5,
**caractérisée en ce que** la tige de piston (22) présente un alésage longitudinal (34) s'étendant sur au moins une partie de la longueur de la tige de piston (22).

7. Unité d'amortissement autorégulée (10) selon l'une des revendications 1 à 6,
**caractérisée en ce qu'**il est prévu une autre butée (32) contre laquelle le contrepoids de commutation (26) vient en appui lorsqu'il a été déplacé au maximum hors de sa position de repos.

8. Unité d'amortissement autorégulée (10) selon l'une des revendications 1 à 7,
**caractérisée en ce que** l'unité d'amortissement (10) comprend en outre un amortisseur d'impulsions (44) qui est en contact avec le contrepoids de commutation (26) dans une position de repos initiale.

9. Unité d'amortissement autorégulée (10) selon la revendication 8,
**caractérisée en ce que** l'amortisseur d'impulsions (44) est relié à un élément élastique (46) qui pousse l'amortisseur d'impulsions (44) en direction du contrepoids de commutation (26).

10. Unité d'amortissement autorégulée (10) selon la revendication 8 ou 9,
**caractérisée en ce qu'**une surface du contrepoids de commutation (26), conçue pour entrer en contact avec l'amortisseur d'impulsions (44), et/ou une surface de l'amortisseur d'impulsions (44), conçue pour entrer en contact avec le contrepoids de commutation (26), est pourvue d'une structure permettant de définir une adhérence de surface entre le contrepoids de commutation (26) et l'amortisseur d'impulsions (44).

11. Unité d'amortissement autorégulée (10) selon l'une des revendications 1 à 10,
**caractérisée en ce que** le contrepoids de commutation (26) est monté solidairement en rotation sur la tige de piston (22), et/ou le contrepoids de commutation (26) présente sur sa surface intérieure une rainure (38) conçue pour établir une communication fluidique entre l'alésage traversant (36) et la chambre de travail (18) dans laquelle est disposé le contrepoids de commutation (26), indépendamment d'une orientation en rotation du contrepoids de commutation (26) par rapport à la tige de piston (22).

12. Unité d'amortissement autorégulée (10) selon la revendication 11,
**caractérisée en ce que** le contrepoids de commutation (26), dans le cas d'un blocage en rotation par rapport à la tige de piston (22), présente une saillie qui s'engage dans un évidement, en particulier dans une rainure, formé sur la tige de piston (22).

13. Unité de ceinture de sécurité, en particulier pour un véhicule, comprenant une ceinture de sécurité et une unité d'amortissement autorégulée (10) selon l'une des revendications 1 à 12, la ceinture de sécurité étant reliée directement ou indirectement à un élément parmi la tige de piston (22) et le cylindre (12), et l'autre élément parmi la tige de piston (22) et le cylindre (12) étant relié à un ensemble structurel supérieur, en particulier à une carrosserie de véhicule.
